Europäisches Patentamt

European Patent Office

Office européen des brevets

(11) Veröffentlichungsnummer: **0 245 708 B1**

(19)

## (12) EUROPÄISCHE PATENTSCHRIFT

(45) Veröffentlichungstag der Patentschrift: **01.04.92**

(21) Anmeldenummer: **87106235.2**

(22) Anmeldetag: **29.04.87**

(51) Int. Cl.⁵: **F25D 3/11**, F25D 25/04, B65G 33/12, //A23L3/36

(54) **Vorrichtung zur Schnellkühlung oder Schockfrostung von schüttfähigen Produkfen.**

(30) Priorität: **13.05.86 DE 3616117**

(43) Veröffentlichungstag der Anmeldung:
**19.11.87 Patentblatt 87/47**

(45) Bekanntmachung des Hinweises auf die
Patenterteilung:
**01.04.92 Patentblatt 92/14**

(84) Benannte Vertragsstaaten:
**BE CH DE FR GB IT LI NL SE**

(56) Entgegenhaltungen:
**US-A- 3 304 732**
**US-A- 3 446 030**

(73) Patentinhaber: **KOHLENSÄUREWERK DEUTSCHLAND GMBH**
**Melkenweg 1**
**W-5462 Bad Hönningen(DE)**

(72) Erfinder: **Fleig, Alois, Dipl.-Ing.**
**Am Grabenacker 22**
**W-7505 Ettlingen 6(DE)**
Erfinder: **Wilhelmi, Ingo**
**Sprudelstrasse 59**
**W-5462 Bad Hönningen(DE)**

(74) Vertreter: **Selting, Günther, Dipl.-Ing. et al**
**Deichmannhaus am Hauptbahnhof**
**W-5000 Köln 1(DE)**

EP 0 245 708 B1

## Beschreibung

Die Erfindung betrifft eine Vorrichtung nach dem Oberbegriff des Patentanspruchs 1.

In der Nahrungsmittelindustrie und in ähnlichen Bereichen besteht die Aufgabe, schüttfähige Produkte auf schonende und wirtschaftliche Weise einzeln zu frosten, ohne daß die Teile während des Frost- oder Kühlvorganges auf der Unterlage anfrieren, zusammenfrieren oder eingedrückt werden. Zur Durchführung der Schnellkühlung ist es bekannt, Hordenschränke, Langbandfroster oder Wendelfroster zu benutzen. Bekannt sind ferner Trommelfroster, bei denen die zu behandelnden Produkte in eine Trommel eingegeben werden, in die gleichzeitig ein Kältemittel eingesprüht wird. Solche Trommelfroster haben den Nachteil einer großen Baulänge. Außerdem besteht die Gefahr, daß das Kältemedium nur mit einer Seite der Produktschüttung (der Oberseite) in Kontakt kommt.

Aus US-A-3 446 030 ist eine Vorrichtung zum schnellfrosten von Produkten bekannt, von der der Oberbegriff des Patenanspruchs 1 ausgeht. Diese bekannte Vorrichtung weist eine äußere Trommel auf, in die die Produkt-Zuführvorrichtung mündet und in der eine Behandlung des Produkts mit dem Kältemittel erfolgt. Im Innern der ersten Trommel befindet sich eine weitere Trommel. Nachdem das Produkt die erste Trommel in Längsrichtung passiert hat, wird es am Ende der äußeren Trommel über Mitnehmerelemente in den oberen Trommelbereich angehoben, von wo es auf eine Rutsche fällt, die in die innere Trommel hineinfällt. Das Produkt durchläuft die innere Trommel in Gegenrichtung zur äußeren Trommel und verläßt die innere Trommel an demselben Ende der Vorrichtung, an dem sich die Produkt-Zuführvorrichtung befindet. Beide Trommeln haben separate Antriebe.

Der Erfindung liegt die Aufgabe zugrunde, eine Vorrichtung nach dem Oberbegriff des Patentanspruchs 1 zu schaffen, bei der die Produktübergabe von der einen Trommel in die andere Trommel vereinfacht ist, und die eine wirtschaftliche Durchführung von Behandlungsprozessen und eine wirtschaftliche Ausnutzung des eingesetzten Kältemittels gewährleistet.

Die Lösung dieser Aufgabe erfolgt erfindungsgemäß mit den Merkmalen des kennzeichnenden Teils des Patentanspruchs 1.

Nach der Erfindung werden zwei ineinander angeordnete Trommeln benutzt, die einzeln oder gemeinsam rotieren. Das schüttfähige Produkt wird zunächst in die innere Trommel geleitet, in dieser der Kältebehandlung ausgesetzt und während der Trommeldrehung weitertransportiert, um nach Verlassen der inneren Trommel in die äußere Trommel zu fallen, wo es im Gegenstrom zurücktransportiert wird. Bei der erfindungsgemäßen Vorrichtung erfolgt die Produktübergabe dadurch, daß das die innere Trommel verlassende Produkt in die äußere Trommel hereinfällt. Eine Produkt-Hebevorrichtung ist nicht erforderlich. Die Verweilzeit der Produkte in der inneren Trommel kann durch gezielten Produktstau am Ende dieser inneren Trommel beeinflußt werden. Eine solche Beeinflussung kann durch Staukörper oder andere Einbauten erfolgen, die am Auslaßende der inneren Trommel vorgesehen sind.

In Abhängigkeit von der Art des eingesetzten Kältemittels kann der Ort der Einsprühung unterschiedlich gewählt werden. Wenn das Kältemittel ein Gas ist, das auch im expandierten Zustand gasförmig bleibt, erfolgt die Einsprühung zweckmäßigerweise in der äußeren Trommel, also im Rücklaufweg des Produktes, wobei die innere Trommel als Vorkühlstrecke benutzt wird. Wird als Kältemittel ein Gas verwendet, das bei der Expansion Schnee ergibt, dann sollte dieses Gas möglichst in der Nähe des Produkteinlasses der inneren Trommel versprüht werden, damit der Schnee möglichst frühzeitig auf die Produkte aufgetragen wird und diese auf ihrem gesamten Weg durch beide Trommeln hindurch begleitet. Bei Einbringung des Kältemittels in die innere Trommel wird diese kälter als die äußere Trommel. Dadurch werden die Kälteverluste verringert und die Ausnutzung des Kältemittels wird verbessert.

Die Erfindung ermöglicht durch eine verbesserte Art der Kaltgas-Abführung eine bessere Kälteausnutzung, wodurch als Kältemittel die Verwendung von $N_2$ möglich gemacht wird. Eine Trennung des Produkts vom Kältemittel ist nicht erforderlich.

Der Vortrieb des Produktes kann entweder durch Schwerkraftwirkung erfolgen, wozu die betreffende Trommel mit in Förderrichtung geneigter Achse ausgebildet ist, oder durch mechanische Hilfsmittel, wie Wendeln oder Flügel. Im Falle mechanischer Vortriebsmittel, die an den Trommelwänden angeordnet sind, kann eine zusätzliche Agitation des Produktes hervorgerufen werden, wodurch der Gefahr des gegenseitigen Anfrierens der einzelnen Produktteile zusätzlich entgegengewirkt wird.

Durchmesser, Drehzahl, Neigung und Querschnittsform der Trommeln sowie die Art und Ausführung der Einbauten können in Abhängigkeit von der Art der zu behandelnden Produkte variieren und an das Kühl- oder Rollverhalten der Produkte angepaßt werden.

Die erfindungsgemäße Vorrichtung eignet sich nicht nur zur Frostung von Produkten, sondern beispielsweise auch zur Kühlung von Fertigprodukten, z.B. von gewürfeltem Hühnerfleisch oder Klößchen und ähnlichem.

Vorteilhafte Ausgestaltungen der Erfindung sind in den Unteransprüchen angegeben.

Im folgenden werden unter Bezugnahme auf die Zeichnungen Ausführungsbeispiele der Erfindung näher erläutert.

Es zeigen:

Fig. 1    einen schematischen Längsschnitt durch eine Vorrichtung mit zwei entgegengesetzt geneigten Trommeln,

Fig. 2    eine Vorrichtung mit zwei koaxialen Trommeln, wobei das Kältemittel am Produkteinlaß der ersten Trommel eingesprüht wird, und

Fig. 3    eine Vorrichtung mit zwei koaxialen Trommeln, wobei das Kältemittel in die äußere Trommel eingesprüht wird.

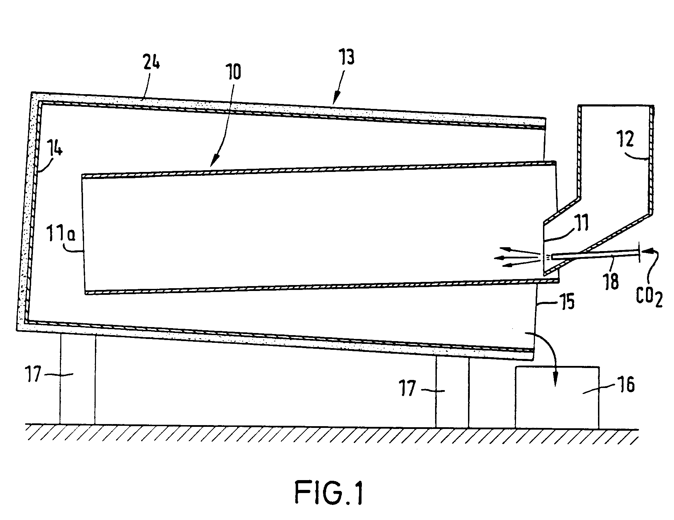

Die in Fig. 1 dargestellte Vorrichtung weist eine erste Trommel 10 auf, die aus einem an den Stirnseiten offenen zylindrischen Rohr besteht, dessen Achse relativ zur Horizontalen in Förderrichtung geneigt ist. Der Produkteinlaß 11 befindet sich an dem höherliegenden Ende der Trommel 10. In dieses Ende ragt ein feststehender Einführtrichter 12 hinein. Die erste Trommel 10 wird von einem (nicht dargestellten) Antrieb um ihre Längsachse gedreht. Dabei wird das in die Trommel eingeführte Schüttgut infolge der Trommelneigung durch Schwerkraftwirkung in Längsrichtung transportiert. Das Schüttgut verläßt den ersten Produktauslaß 11a, d.h. das dem Produkteinlaß abgewandte Trommelende, und fällt in das Innere der zweiten Trommel 13, welche die erste Trommel 10 umgibt. Das in der Nähe des ersten Produktauslasses 11a angeordnete Ende der zweiten Trommel 13 ist durch die Stirnwand 14 verschlossen. Das gegenüberliegende Ende der zweiten Trommel 13 ist zur Bildung des Produktauslasses 15 offen. Dieses Trommelende ist tiefer angeordnet als die Stirnwand 14, d.h. die zweite Trommel 13, die ebenfalls rotiert, ist in Gegenrichtung zur ersten Trommel 10 schräggestellt. Das den zweiten Produktauslaß 15 verlassende Schüttgut fällt in einen Behälter 16 oder wird einer Verpackungseinrichtung zugeführt. Die Lagerböcke der zweiten Trommel 13 sind mit 17 bezeichnet.

In der Nähe des ersten Produkteinlasses 11 mündet die feststehende Kältemittelleitung 18 in die erste Trommel 10. Aus der Kältemittelleitung 18 wird ein Kältemittel, im vorliegenden Fall Kohlendioxid ($CO_2$) unter Druck in die erste Trommel 10 eingesprüht. Das Kältemittel wird bei der Expansion in Luft zu Schnee, der sich auf den Produkten ablagert. Infolge der Rollbewegung im Innern der Trommel 10 werden die Produkte gleichmäßig mit Schnee beschichtet. Im weiteren Verlauf des Weges durch die beiden Trommeln 10 und 13 kühlt sich die Produktoberfläche an der Schneebeschichtung ab.

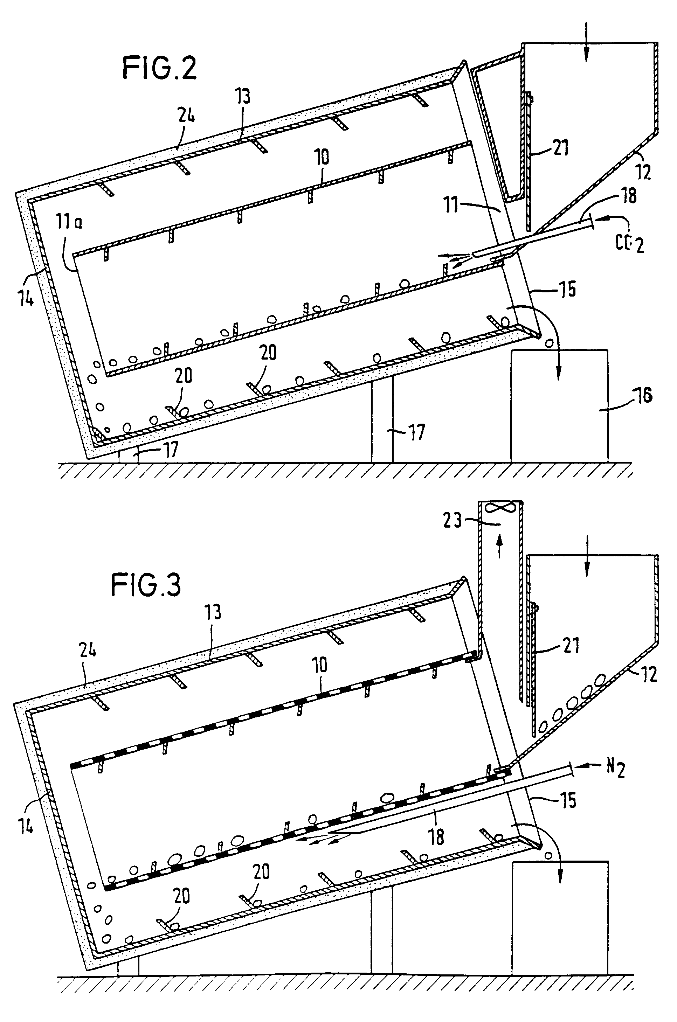

Bei dem Ausführungsbeispiel der Fig. 2 ist die erste Trommel 10 koaxial und fest in der zweiten Trommel 13 angeordnet. Der Produktauslaß 11a der ersten Trommel 10 befindet sich im axialen Abstand von der Stirnwand 14 der zweiten Trommel. Die Wände der beiden Trommeln sind durchgehend, d.h. sie haben keine Perforation. Die gemeinsame Trommelachse beider Trommeln verläuft schräg zur Horizontalen, wobei der erste Produkteinlaß 11 höher angeordnet ist als der erste Produktauslaß 11a. An der Innenseite der Umfangswand der zweiten Trommel 13 sind Wendeln 20 und Flügel angebracht, die die Produktteilchen bei Drehung der Trommeln zu dem höher liegenden zweiten Produktauslaß 15 fördern. Die Kältemittelleitung 18 führt in die erste Trommel 10 hinein und das Versprühen des Kältemittels (Kohlendioxid) erfolgt kurz hinter dem ersten Produkteinlaß 11.

Das Produkt wird in den Einführtrichter 12 eingefüllt und durch geeignete Einstellung eines Schiebers 21 dosiert in die erste Trommel 10 eingegeben. In der drehenden Trommel 10 wird das Produkt bis zum Produktauslaß 11a fortbewegt, wo es in die zweite Trommel 13 hinein austritt. In der zweiten Trommel 13 erfolgt die Vorwärtsbewegung des Produktes im Gegenstrom zur ersten Trommel, wobei der Transport durch die Wendeln 20 oder Flügel bewirkt wird.

Das Ausführungsbeispiel der Fig. 3 entspricht weitgehend demjenigen der Fig. 2, jedoch wird anstelle eines schneebildenden Kältemittels ein gasförmig bleibendes Kältemittel ($N_2$) benutzt. Die Umfangswand der inneren Trommel 10 ist perforiert, d.h. sie besteht aus einer Lochwand oder einem Gitter. Die feststehende Kältemittelleitung 18 ragt außerhalb der inneren Trommel 10 in die äußere Trommel 13 hinein und das Versprühen des Kältemittels erfolgt im erheblichen Abstand von den Trommelenden, beispielsweise im mittleren Bereich der Trommellänge. Das Kältemittel gelangt zunächst unmittelbar auf diejenigen Produktteilchen, die sich in der zweiten Trommel 13 befinden, wirkt jedoch über die perforierte Wand der Trommel 10 auch auf die im Innern der Trommel 10 befindlichen Produktteilchen. Das erwärmte Kältemittel wird schließlich durch ein Abgasrohr 23 abgesaugt. Bei dem Ausführungsbeispiel der Fig. 3 wirkt das innere Rohr 10 als Vorkühlstrecke, während die eigentliche Frostung im äußeren Rohr 13 und außerhalb des inneren Rohres 10 erfolgt.

Bei allen beschriebenen Ausführungsbeispielen ist das äußere Rohr 13 einschließlich der Stirnwand 14 mit einem wärmeisolierenden Mantel 24 versehen.

Die Trommeln 10 und 13 sind in den Zeichnungen jeweils als zylindrische Rohre dargestellt. Es besteht auch die Möglichkeit, die Querschnittsform der Trommeln in Längsrichtung zu verändern, so daß zylindrische und polygonale Rohrabschnitte einander abwechseln. Dadurch wird erreicht, daß die Produkte rundum mit $CO_2$-Schnee behaftet und

schneller und wirtschaftlicher durchfrostet werden. Außerdem werden die Produkte lose gehalten, weil sie durch die Schüttelung nicht aneinander festfrieren können.

**Patentansprüche**

1. Vorrichtung zur Schnellkühlung oder Schockfrostung von schüttfähigen Produkten, mit einer Produkt-Zuführvorrichtung (12), einer rotierenden inneren Trommel (10), die an einem Ende einen ersten Produkteinlaß (11) und am anderen Ende einen ersten Produktauslaß (11a) aufweist, einer die innere Trommel (10) umgebenden, ebenfalls rotierenden äußeren Trommel (13), in der das Produkt entgegen der Förderrichtung der inneren Trommel (10) gefördert wird, und mit mindestens einer in eine der Trommeln (10,13) hineinführenden, dem Produkt ein Kältemittel zuführenden Kältemittelleitung (18), **dadurch gekennzeichnet,** daß die Produkt-Zuführvorrichtung (12) das Produkt dem ersten Produkteinlaß (11) der inneren Trommel (10) zuführt und daß der erste Produktauslaß (11a) im Innern der äußeren Trommel (13) derart angeordnet ist, daß das ihn verlassende Produkt in die äußere Trommel fällt.

2. Vorrichtung nach Anspruch 1, dadurch gekennzeichnet, daß mindestens eine Trommel (10,13) in Förderrichtung geneigt ist.

3. Vorrichtung nach Anspruch 1 oder 2 dadurch gekennzeichnet, daß beide Trommeln (10,13) koaxial ineinander angeordnet und drehfest verbunden sind und von einem einzigen Antrieb angetrieben sind.

4. Vorrichtung nach einem der Ansprüche 1 bis 3, dadurch gekennzeichnet, daß die erste Trommel (10) eine durchbrochene Umfangswand aufweist.

5. Vorrichtung nach einem der Ansprüche 1 bis 4, dadurch gekennzeichnet, daß mindestens eine der Trommeln (10,13) Wendeln (20) oder Flügel zur Förderung des Produktes aufweist.

6. Vorrichtung nach einem der Ansprüche 1 bis 5, dadurch gekennzeichnet, daß die Kältemittelleitung (18) in der Nähe des ersten Produkteinlasses (11) in die innere Trommel (10) mündet, und daß das Kältemittel ein Gas ist, das bei Expansion in Luft Schnee bildet.

7. Vorrichtung nach einem der Ansprüche 1 bis 5, dadurch gekennzeichnet, daß die Kältemittelleitung (18) außerhalb der inneren Trommel (10) in die äußere Trommel (13) mündet, und daß die Umfangswand der inneren Trommel (10) für das Kältemittel durchlässig ist.

8. Vorrichtung nach einem der Ansprüche 1 bis 7, dadurch gekennzeichnet, daß mindestens eine Trommel in Längsrichtung variierende Querschnittsformen hat.

**Claims**

1. A device for rapid-chilling or shock-frosting of pourable products comprising a product supply device (12), a rotating inner drum (10) having a first product inlet (11) at one end a first product outlet (11a) at the other end, an outer drum (13) surrounding said inner drum (10) and also rotating, in which the product is transported against the transport direction of said inner drum (10), and at least one refrigerant conduit (18) leading into one of said drums (10, 13) and supplying a refrigerant to said product, characterized in that said product supply device (12) supplies said product to said first product inlet (11) of said inner drum (10) and that said first product outlet (11a) is arranged within said outer drum (13) such that the product leaving the same falls into said outer drum.

2. The device of claim 1, characterized in that at least one drum (10, 13) is inclined in the transport direction.

3. The device of claim 1 or 2, characterized in that both drums (10, 13) are arranged coaxially within each other and are connected for common rotation and are driven by a single drive.

4. The device of one of claims 1 to 3, characterized in that said first drum (10) has a permeable circumferential wall.

5. The device of one of claims 1 to 4, characterized in that at least one of said drums (10, 13) is provided with screws (20) or vanes for transporting said product.

6. The device of one of claims 1 to 5, characterized in that said coolant conduit (18) opens into said inner drum (10) near said first product inlet (11) and that said refrigerant is a gas that forms snow when expanding in air.

7. The device of one of claims 1 to 5, characterized in that said refrigerant conduit (18) opens outside said inner drum (10) into said outer drum (13) and that said circumferential wall of said inner drum (10) is permeable to said refrigerant.

8. The device of one of claims 1 to 7, characterized in that at least one drum has cross-sectional shapes varying in the longitudinal direction.

**Revendications**

1. Dispositif de réfrigération rapide ou de congélation **choc de** produits en vrac, comprenant un dispositif d'amenée de produit (12), un tambour intérieur rotatif (10), comprenant à une extrémité une première entrée de produit (11) et à l'autre extrémité une première sortie de produit (11a), un tambour extérieur (13), entourant le tambour intérieur (10) et également rotatif, dans lequel le produit avance dans un sens opposé au sens d'avancement dans le tambour intérieur (10), et au moins une tuyauterie d'agent de refroidissement (18) aboutissant dans l'un des tambours (10, 13) et amenant un agent de refroidissement au produit, caractérisé en ce que le dispositif d'amenée de produit (12) amène le produit à la première entrée de produit (11) du tambour intérieur (10) et en ce que la première sortie de produit (11a) est disposée à l'intérieur du tambour extérieur (13) de telle façon que le produit qui la quitte tombe dans ce tambour extérieur.

2. Dispositif suivant la revendication 1, caractérisé en ce qu'au moins l'un des tambours (10, 13) est incliné suivant la direction d'avancement.

3. Dispositif suivant la revendication 1 ou 2, caractérisé en ce que les deux tambours (10, 13) sont disposés l'un dans l'autre d'une manière coaxiale et en ce qu'ils sont solidaires en rotation et sont entraînés par un entraînement unique.

4. Dispositif suivant l'une des revendications 1 à 3, caractérisé en ce que le premier tambour (10) comprend une paroi périphérique ajourée.

5. Dispositif suivant l'une des revendications 1 à 4, caractérisé en ce qu'au moins l'un des tambours (10, 13) comporte des éléments hélicoïdaux (20) ou des ailettes servant à faire avancer le produit.

6. Dispositif suivant l'une des revendications 1 à 5, caractérisé en ce que la tuyauterie d'agent de refroidissement (18) débouche dans le tambour intérieur (10) au voisinage de la première entrée de produit (11) et en ce que l'agent de refroidissement est un gaz qui forme de la neige lorsqu'il se détend dans l'air.

7. Dispositif suivant l'une des revendications 1 à 5, caractérisé en ce que la tuyauterie d'agent de refroidissement (18) débouche dans le tambour extérieur (13) à l'extérieur du tambour intérieur (10) et en ce que la paroi périphérique du tambour intérieur (10) est perméable à l'agent de refroidissement.

8. Dispositif suivant l'une des revendications 1 à 7, caractérisé en ce qu'au moins l'un des tambours a une forme en section transversale qui varie suivant la direction longitudinale.

FIG.1

## FIG.2

## FIG.3